# EUROPEAN PATENT APPLICATION

(11) **EP 1 887 770 A1**
(43) Date of publication of application: **13.02.2008**
(21) Application number: 06254212.1
(22) Date of filing: 10.08.2006
(51) Int. Cl.: H04M 1/725, H04M 1/60

(54) **Automatic pairing method for building up a connection between a Bluetooth-enabled headset and a master unit**

(71) Applicant: Skyline Information Co., Ltd., Taipei (TW)
(72) Inventor: Han, Allen, Hsin-Chung Tapei (TW)
(74) Representative: Carter, Stephen John

(57) **Abstract**

The present invention provides a method that allows for easy pairing and connection of a Bluetooth enabled headset/master unit set. Under the power on condition, the headset has a push button that when pushed a short period of time, automatically causes the master unit to pair and to connect with the master unit.

## Description

### BACKGROUND OF THE INVENTION

### 1. Field of the Invention

The present invention relates to a wireless headsets and a master unit, and more particularly, to a pairing method between a Bluetooth enabled headsets and a master unit.

### 2. Description of the Prior Art

*Bluetooth,* a trademark of Bluetooth SIG (Special Interest Group), Inc., a wireless communications standard, allows Bluetooth-enabled devices for linking each other within approximate 10 meters, to construct a network called PAN (Personal Area Network). Bluetooth wireless technology operates at 2.4 GHz unlicensed ISM band and is capable of transmitting voice and data. This short-distance transmitting can be anywhere, either at the public place as in office or library, or at the private place as in car or home. It cuts the need for cables and has advantages of lightweight and small package for users' convenience. In addition, Bluetooth is designed with low cost, low power consumption, and easy for use, so that a huge market in the future can be anticipated.

A pair of Bluetooth-enabled devices comprises a slave unit and a master unit; they will proceed with a pairing procedure before to communicate with each other. The master unit initiates an inquiry procedure to search for other slave units. When one or more slave units come in range, they make response to the master unit, and then the master unit will proceed with a sequence of procedures to decide whether communicating with the slave unit. If yes, the master unit and the specified slave unit build up a connection via the pairing procedure. A master unit can communicate with up to seven slave units. This network of group of up to eight devices (one master + seven slaves) is called a piconet. Moreover, Bluetooth specification allows connecting two or more piconets together to form a scatternet.

Bluetooth wireless headsets provide greater convenience to the users. For example, by using Bluetooth wireless headsets to communicate with a cellular phone, the user can speak to customers taking business associated upon the telephone, and simultaneously enters data into a computer by his free hands. But the user may suffer from complexity of operation in relation to pairing the cellular phone to the headsets. For instance, a conventional pairing instruction may comprise the following steps:
(a) The user turns on the Bluetooth cellular phone.
(b) The user presses a button until an indicated light start to blink.
(c) The cellular phone searches for the headsets, some information being display when the search is completed.
(d) The cellular phone may ask for a pin number, and the user enters the pin number via the input buttons.
(e) After a few second, the pairing should be completed.

According to these steps, the pairing only occur after the user access a sequence of menus on the display and push buttons to indicate what is desired.

Accordingly, preferably a simplified pairing method is provided in which one Bluetooth enabled device can easily pair with other Bluetooth enabled devices, for greater users' convenience.

### SUMMARY OF THE INVENTION

A preferable object of the present invention is to provide a pairing method, for one Bluetooth enabled device to easily pair and connect with other Bluetooth enabled devices.

According to an aspect of the present invention there is provided a pairing method. The master unit may be an MP3 player. The pairing method comprises the steps of: turning on the power of said master unit; turning on the power of said Bluetooth-enabled headset, automatically entering the connectable mode; making the Bluetooth-enabled headset enter the connect mode; proceeding an inquiry procedure by the master unit; determining if any Bluetooth-enabled devices is available by the master unit; determining if the protocols of the responded Bluetooth-enabled devices is Advanced Audio Distribution Profile (A2DP); and establishing a pairing and connection between the Bluetooth-enabled headset and the master unit.

### BRIEF DESCRIPTION OF THE DRAWINGS

Fig. 1 is a program flowchart of the Bluetooth-enabled headsets of the pairing method according to one embodiment of the present invention.
Fig. 2 is a program flowchart of the master unit of the pairing method according to one embodiment of the present invention.

### DESCRIPTION OF THE PREFERRED EMBODIMENT

The detailed description of the present invention will be discussed in the following embodiments, which are not intended to limit the scope of the present invention, but can be adapted for other applications.

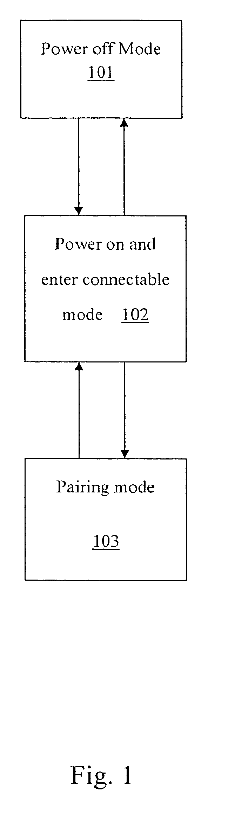

Fig. 1 is a program flowchart of the Bluetooth-enabled headsets of the pairing method according to one embodiment of the present invention. The Bluetooth-enabled headsets is initially at default state, that is, power off mode 101. The Bluetooth-enabled headsets has a push button (not shown), when pushed a period of time, such as three seconds, will turn on the Bluetooth-enabled headsets and enter the connectable mode 102. The connectable mode 102 is automatically entered immediately after the power has turned on. In the connectable mode 102, the Bluetooth-enabled headsets determine whether the Bluetooth-enabled headsets had ever communicated with other Bluetooth-enabled master units before, according to the Bluetooth Device Address (BD_ADDR) saved in its firmware. If one master unit had ever been connected with the Bluetooth-enabled headsets, then its BD_ADDR will be saved in the firmware. Thus, if one of Bluetooth Device Addresses had saved in the firmware, the Bluetooth-enabled headsets proceed with the page procedure, trying to establish a connection with the master unit specified by the Bluetooth Device Address. On the contrary, if none of the Bluetooth Device Addresses had been saved, it will remain on the connectable mode 102.

Under the connectable mode 102, any master units cannot search the Bluetooth-enabled device. By Bluetooth terminology, the Bluetooth-enabled headsets not activated (enter) the Inquiry_Scan substate yet, and thus cannot receive the packet from the master unit. If the Bluetooth-enabled headsets is first time to use, or wants connecting it with other master units, then the Bluetooth-enabled headsets must enter the pairing mode 103. Under the connectable mode 102, if the user press the push button a short period of time, the Bluetooth-enabled headsets will enter the pairing mode 103; if the user press the bush button a long period of time, the Bluetooth-enabled headsets will back to the power off mode 101. In the pairing mode 103, the Bluetooth-enabled headsets activates the Inquiry-Scan substate, and thus it is capable of receiving the packet from any master units, for preparing to proceed with the pairing and connecting procedure later. If the Bluetooth-enabled headsets is not searched by any master unit after a specific period of time, it will back to the connectable mode 102.

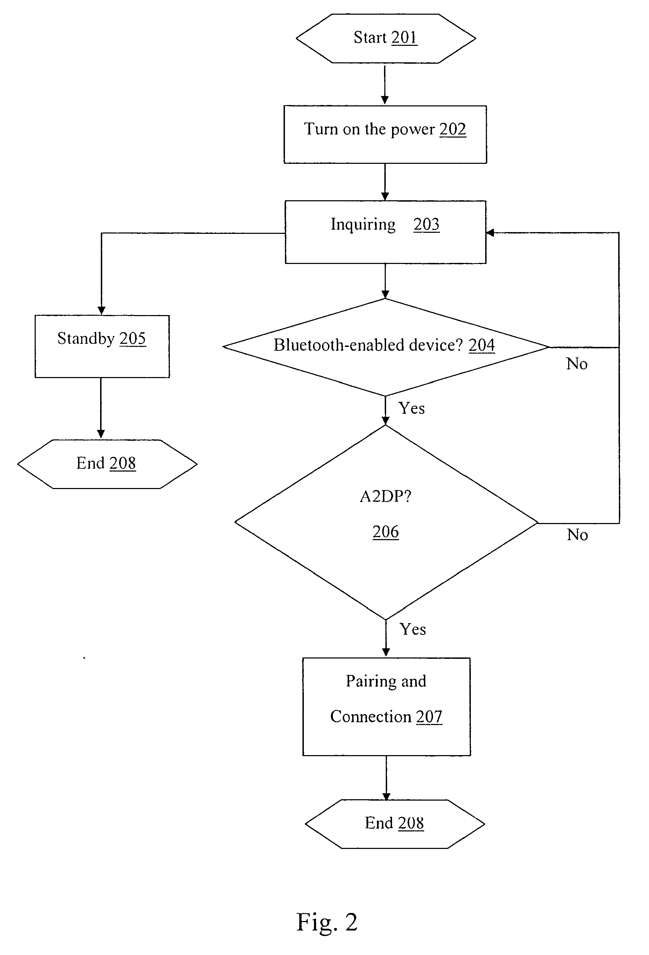

Fig. 2 is the program flowchart of the master unit of the pairing method according to one embodiment of the present invention. In this embodiment, the master unit is a MPEG-1 Audio Layer 3 player (abbreviated to MP3 player). In other embodiments of the present invention, the master unit can be other Bluetooth-enabled devices, such as a cellular phone or the like. According to the flowchart, the pairing method related to the master unit comprises the steps of:
(a) Step 201, operations start.
(b) Step 202, the user turns on the power, automatically causing the master unit to enter the Inquiry mode (step 203).
(c) Step 204, if any Bluetooth-enabled devices is entered the Inquiry-Scan substate, it will respond a Inquiry Response and Bluetooth Device Address (BD_ADDR ) involved message to the master unit; if none of any Bluetooth-enabled devices responds, the master unit will remain in Inquiry Mode (step 203).
(d) Step 205, if a time criteria is met and still none of Bluetooth-enabled devices responds, the master unit will enter the Standby mode.
(e) Step 206, the master unit determines whether the protocols of the responded Bluetooth-enabled device is defined by Advanced Audio Distribution Profile (A2DP). If yes, determine that the responded Bluetooth-enabled device is a Bluetooth-enabled headsets, and then proceed with the step 207; if not, back to the Inquiry mode 203.
(f) Step 207, the master unit transmit a Page message to the Bluetooth-enabled headsets having a specific BD_ADDR and qualified by steps 206, proceeding with the Paring procedure and building up the Connection.
(g) Step 208, operation end.

According to the embodiment of the present invention, the master unit and the Bluetooth-enabled headsets can automatically inquire, pair, and connect with each other. The user only needs to turn on both power of the master unit and the Bluetooth-enabled devices, pushing a button of the Bluetooth-enabled headsets once, and the connection can be made. More conveniently, if the master unit and the Bluetooth-enabled headsets had connected before, the connection can be built without push the button.

Although specific embodiments have been illustrated and described, it will be appreciated by those skilled in the art that various modifications may be made without departing from the scope of the present invention, which is intended to be limited solely by the appended claims.

## Claims

1. A pairing method for building a connection between a Bluetooth-enabled headset and a master unit, comprising the steps of:
turning on the power of said master unit;
turning on the power of said Bluetooth-enabled headset, automatically entering the connectable mode;
making the Bluetooth-enabled headset enter the pairing mode;
proceeding an inquiry procedure by the master unit;
determining if any Bluetooth-enabled devices is available by the master unit;
determining if the protocols of the responded Bluetooth-enabled devices is Advanced Audio Distribution Profile (A2DP); and
establishing a pairing and connection between the Bluetooth-enabled headset and the master unit.

2. The pairing method recited in claim 1, wherein the master unit is a MPEG-1 Audio Layer 3 player (MP3 player).

3. The pairing method recited in claim 1 or 2, wherein said connectable mode further comprises:
determining if the connection had made before with the master unit, connecting directly if the connection had made before, remaining said connectable mode if the connection had never made before.

4. The pairing method recited in claim 1, 2 or 3, wherein the way to automatically enter the connectable mode is to press a push button a long specific period of time.

5. The pairing method recited in claim 4, wherein the way to make the Bluetooth-enabled headset enter the pairing mode is to press said push button a short specific period of time.

6. The pairing method recited in any one of the preceding claims, wherein if the master unit determines that there are no Bluetooth-enabled devices, the method returns back to said inquiry procedure.

7. The pairing method recited in any one of the preceding claims, wherein if the protocols of the responded Bluetooth-enabled devices is not Advanced Audio Distribution Profile (A2DP), the method returns back to said inquiry procedure.

8. The pairing method recited in any one of the preceding claims, wherein if none of Bluetooth-enabled devices responds to said inquiry procedure after a time criteria, the master unit will enter the Standby mode.
